Europäisches Patentamt

European Patent Office

Office européen des brevets

(19)

(11) Veröffentlichungsnummer : **0 389 888 B1**

(12) **EUROPÄISCHE PATENTSCHRIFT**

(45) Veröffentlichungstag der Patentschrift :
**21.07.93 Patentblatt 93/29**

(51) Int. Cl.⁵ : **F02B 51/04, F02M 27/04**

(21) Anmeldenummer : **90104986.6**

(22) Anmeldetag : **16.03.90**

(54) **Anordnung zur Verminderung des Kraftstoffverbrauches und der Abgase bei Brennkraftmaschinen, sowie Verfahren zur Kraftstoffreduzierung und Abgasminderung bei Brennkraftmaschinen.**

Die Akte enthält technische Angaben, die nach dem Eingang der Anmeldung eingereicht wurden und die nicht in dieser Patentschrift enthalten sind.

(30) Priorität : **28.03.89 AT 713/89**

(43) Veröffentlichungstag der Anmeldung :
**03.10.90 Patentblatt 90/40**

(45) Bekanntmachung des Hinweises auf die Patenterteilung :
**21.07.93 Patentblatt 93/29**

(84) Benannte Vertragsstaaten :
**BE CH DE DK ES FR GB GR IT LI LU NL SE**

(56) Entgegenhaltungen :
**EP-A- 0 073 077**
**FR-A- 2 482 873**
**US-A- 3 976 726**

(73) Patentinhaber : **Grander, Johann**
**Haus Ingeborg Nr. 370**
**A-6373 Jochberg (AT)**

(72) Erfinder : **Grander, Johann**
**Haus Ingeborg Nr. 370**
**A-6373 Jochberg (AT)**

(74) Vertreter : **Puchberger, Georg, Dipl.-Ing. et al**
**Patentanwälte Dipl.-Ing. Georg Puchberger**
**Dipl.-Ing. Rolf Puchberger Dipl.-Ing. Peter**
**Puchberger Singerstrasse 13 Postfach 55**
**A-1010 Wien (AT)**

EP 0 389 888 B1

## Beschreibung

Die Erfindung betrifft eine Anordnung und eine Verfahren zur Verminderung des Kraftstoffverbrauches und der Abgase bei Brennkraftmaschinen, wobei in der Kraftstoffzuführung zur Verbrennungskammer ein Aktivator mit einer vom Kraftstoff durchströmten Kammer angeordnet ist.

Es ist bekannt, Flüssigkeiten primär zu aktivieren, wobei durch Umwandlung eines Teiles der inneren Energie, unter Abkühlung und Eintrag von Behandlungsenergie, ein höherer Energieinhalt aufgeprägt wird. So ist es auch gelungen, Wasser in seiner elektromagnetischen Struktur so umzuwandeln, daß sowohl durch Modifikation der magnetischen Kernresonanzeigenschaften (Änderung der Spin-Spin-Kopplungskonstanten) als auch durch Induction der Ausbildung von supermolekularen Komplexen zwischen einzelnen Wassermolekülen der elektromagnetische Schwingungszustand modifiziert wurde. Diese elektromagnetischen Schwingungen sind verantwortlich für das Entstehen eines elektromagnetischen Feldes von definierter Frequenz, Phase und Amplitude, welche sich in alle Richtungen gleichmäßig ausbreitet. Überraschenderweise hat es sich gezeigt, daß größere Partikel und Molekülgruppen in einem derartigen elektromagnetischen Feld in kleine Molekülgruppen zerlegt werden, wodurch unter anderem die Viskosität verringert wird, Schadstoffmoleküle aufgelöst werden können und dgl. mehr. Höchst überraschend ist auch, daß der energetische Zustand der aktivierten Flüssigkeiten beibehalten wird, d.h. nicht abklingt.

Aus der US-A 3 976 726 ist es bei Brennkraftmaschinen bekannt, in die Kraftstoffzuführung zur Verbrennungskammer einen Aktivator anzuordnen, der eine vom Kraftstoff durchströmte Kammer enthält, wo der Kraftstoff direkt über eine Spule und Energiezufuhr in seiner elektromagnetischen Struktur beeinflußt wird. Gemäß der Erfindung wird nun bei der eingangs erwähnten Anordnung und bei dem eingangs erwähnten Verfahren vorgeschlagen, den Kraftstoff indirekt zu beeinflussen, indem nämlich das elektromagnetische Feld einer aktivierten Flüssigkeit auf den Kraftstoff einwirkt. Dies hat den Vorteil, daß man zur Beeinflussung des Kraftstoffes nicht ständig Energie zuführen muß, sondern daß die aktivierte Flüssigkeit, deren elektromagnetische Struktur durch Änderung der magnetischen Kernresonanzeigenschaften und durch Ausbildung von supermolekularen Komplexen zwischen den Molekülen in ihrem Schwingungszustand geändert ist, verwendet wird. Durch das eingangs erwähnte elektromagnetische Feld erfolgt ein Einfluß auf andere Flüssigkeiten, wobei die Wirkung durch Wandungen hindurchwirkt und, wie bereits erwähnt, Molekülgruppen verkleinert, so daß Schadstoffmoleküle aufgelöst werden und es findet auch eine vollkommenere Verbrennung von Kraft- und Heizstoffen mit einer drastischen Reduzierung der Schadstoffemission statt. Durch die vollkommenere Verbrennung kann Kraftstoff eingespart werden. Es ist günstig, wenn die Kammer für den Kraftstoff die Kammer für das Anregungsmedium umgibt.

Es gibt allerdings viele Möglichkeiten, hier zum Ziel zu kommen. In einigen Fällen genügt es, den Kraftstoff in einem Rohr durch die mit dem Katalysator gefüllte Kammer hindurchzuleiten. Eine andere Möglichkeit besteht darin, in einer von Kraftstoff durchströmten Kammer ein mäanderförmiges Rohr zu verlegen, das mit dem aktivierten Katalysator gefüllt ist, auch die Anordnung mehrerer, hintreinanderliegender Rohre ist möglich und schließlich ist auch eine Anordnung denkbar, bei der ein oder mehrere mit dem Katalysator gefüllte Rohre in Strömungsrichtung des Kraftstoffes angeordnet sind, wobei diese Rohre so angeordnet sein können, daß ihre Mittelpunkte auf einem Kreis liegen und so in der Mitte des Aktivators eine konzentrische Wirkung auf den durchströmenden Kraftstoff auftritt. Als Anregungsmedium kann man auch aktiviertes Wasser verwenden, das ein elektromagnetisches Feld definierter Frequenz, Phase und Amplitude aufweist. Um den Einfluß des aktivierten Mediums auf den Kraftstoff zu vergrößern, können zwischen den Kammern dünne Wände, z.B. aus Hart-kupfer oder Messing, vorgesehen sein, dann ist die Schwächung des elektromagnetischen Feldes vernachlässigbar.

Die erfinderischen Effekte sollen anhand eines Beispieles erläutert werden. Im vorliegenden Fall wurde als Katalysator in einem Gravitationsenergiewandler aktiviertes Wasser eingesetzt. Diese Gravitationsenergiewandler sind an und für sich bekannt und benutzen Gravitationsmagnetfelder. Bekanntlich baut ein Gravitationsenergiemagnetfeld um sich Teilchenströme auf, die sich mit einer ganz bestimmten Geschwindigkeit bewegen. Diese Teilchenströme, welche von feinstoffähnlicher Art sind, können die herkömmlichen Eisen- und Elektromagnetfelder nicht beeinflussen. Im Gravitationsenergiewandler wird nun durch speziellen Magnetmaterialinhalt und urch diespezielle Anordnung dieser Magnete in einer Scheibe ein Umlenkung der Teilchen erzwungen. Diese Umlenkung der Teilchen in eine neue Bahn läßt im Mittelpunkt einen erhöhten Teilchendruck entstehen und es wird "verdichtete Energie" gebildet. Ein derart aktiviertes Wasser wird beim Betrieb eines PKWs eingesetzt.

Im Rahmen des Vorversuches erfolgte die Bestimmung der polyzyklischen aromatischen Kohlenwasserstoffverbindungen (PAH's) mit einer speziell hiefür bestimmten Probenahmeapparatur. Die Analyse erfolgte im Labor mit Hilfe einer GC/MS-Kopplung. Bestimmt wurden die zwölf wichtigsten Einzelkomponenten.

Die Probenahme (2 Proben) erfolgte an einem PKW direkt im Auspuffstutzen bei folgenden Bedingungen:

Die Probenahme wurde am stehenden PKW (37 kW) mit erhöhtem Standgas bei ca. 3500 U/min vorgenommen.

Nachdem die Primär-Abgasreinigung im PKW bereits installiert war, war keine Möglichkeit eines Null-Versuches gegeben. Die Meßwerte mußten daher mit Literaturwerten verglichen werden. In der Kürze der Zeit wurde keine umfassende Literaturrecherche vorgenommen, sondern die kurzfristig zur Verfügung stehende Literatur, wie folgt, verwendet:

VDI-Bericht Nr.429/1982 - G.W.Israel, K.H.Zieroch, K.Mallenbauer "Größenverteilung und chemische Zusammensetzung der Partikelemissionen verschiedener Dieselmotoren"

Die nachfolgend angeführten PAH-Einzelkomponenten sind auf Normbedingung (273 K, 1013 mbar) und trockenes Abgas bezogen:

Meßzeit          11.05 - 11.30 Probe 1
                 11.50 - 12.15 Probe 2
Probevolumen     0,1906 m³      Probe 1
                 0,1965 m³      Probe 2

| | Konzentration µg/m³ | | | |
| Komponente | Probe 1 | Probe 2 | VDI-Bericht | |
| --- | --- | --- | --- | --- |
| Fluranthen | 5,77 | 4,66 | 42 | (4,4 - 119) |
| Pyren | 5,25 | 1,18 | 39 | (3,7 - 109) |
| Benzo(a)anthracen | 0,53 | 0,26 | - | - |
| Chrysen+Triphenylen | 1,26 | 1,08 | - | - |
| Benzo(b)fluranthen | 0,32 | 0,36 | 13,1 | (0,6 - 58) |
| Benzo(e)pyren | 0,11 | 0,10 | 10,1 | (0,5 - 45) |
| Benzo(a)pyren | <0,05 | <0,05 | 7,3 | (0,3 - 50) |
| Perylen | <0,05 | <0,05 | 1,9 | (0,08 - 10) |
| Dibenz(ah)anthracen | <0,05 | <0,05 | - | - |
| Benzo(ghi)perylen | 0,05 | <0,05 | 19,9 | (1 - 86) |
| Anthanthren | < 0,16 | <0,16 | - | - |
| Coronen | <0,16 | <0,16 | - | - |

Bemerkung: Die Konz. <0,05 bzw. <0,16 µg/m³ stellen die Nachweisgrenze des Meßverfahrens dar

Ausgenommen die Komponenten Fluranthen und Pyren sind die Stoffe kanzerogen und/oder mutagen.

Bezogen auf die PAH-Einzelkomponenten Benzo(b)fluranthen bis Benzo(ghi)perylen zeigen die Proben 1 und 2 deutlich geringere Konzentrationen. Die Verminderung der Emissionskonzentrationen liegt in Abhängigkeit der Einzelkomponenten im Bereich von 40% bis 95%.

**Patentansprüche**

1.  Anordnung zur Verminderung des Kraftstoffverbrauches und der Abgase bei Brennkraftmaschinen, wobei in der Kraftstoffzuführung zur Verbrennungskammer ein Aktivator mit einer vom Kraftstoff durchströmten Kammer angeordnet ist, dadurch gekennzeichnet, daß in diesen Kammern mindestens eine weitere, mit einem aktivierten Medium gefüllte Kammer vorhanden ist, bei welchem Medium vorher, also vor Einbringen in die Kammer, die elektromagnetische Struktur durch Änderung der magnetischen Kernresonanzeigenschaften und durch Ausbildung von supermolekularen Komplexen zwischen den Molekülen der Schwingungszustand geändert ist und daß das aktivierte Medium mit seinem elektromagnetischen Feld auf den Kraftstoff einwirken gelassen wird.

2.  Anordnung nach Anspruch 1, dadurch gekennzeichnet, daß die Kammer für den Kraftstoff die Kammer für das Anregungsmedium umgibt.

3. Anordnung nach Anspruch 1 oder 2, dadurch gekennzeichnet, daß das Anregungsmedium aktiviertes Wasser ist, das ein elektromagnetisches Feld definierter Frequenz, Phase und Amplitude aufweist.

4. Anordnung nach einem der vorhergehenden Ansprüche, dadurch gekennzeichnet, daß zwischen den Kammern dünne Wände, z.B. aus Hartkupfer oder Messing, vorgesehen sind.

5. Anordnung nach einem der vorhergehenden Ansprüche, dadurch gekennzeichnet, daß mehrere Rohre für das Anregungsmedium entlang eines Kreises angeordnet sind, so daß innerhalb dieses Kreises eine konzentrierte Wirkung auf den durchströmenden Kraftstoff gegeben ist.

6. Anordnung nach einem der vorhergehenden Ansprüche, dadurch gekennzeichnet, daß der Aktivator nahe des Eintrittes des Kraftstoffes in die Kraftstoffzuführung vorgesehen ist.

7. Verfahren zur Kraftstoffreduzierung und Abgasminderung bei Brennkraftmaschinen, dadurch gekennzeichnet, daß der Kraftstoff an einer Kammer vorbeigeführt wird, die mit einer Flüssigkeit geänderter elektromagnetischer Struktur gefüllt ist und das elektromagnetische Feld dieser Flüssigkeit auf den Kraftstoff einwirken gelassen wird.

8. Verfahren nach Anspruch 7, dadurch gekennzeichnet, daß als Flüssigkeit mit geänderter, elektromagnetischer Struktur Wasser eingesetzt wird, das über einen Gravitationsenergiewandler aktiviert worden ist.

## Claims

1. Installation for reducing fuel consumption and exhaust gases in internal combustion engines, wherein an activator having a chamber through which the fuel flows is disposed in the fuel supply line to the combustion chamber, characterized in that in these (activator) chambers at least one further chamber filled with an activated medium is provided, in which medium, previously that is to say before it is introduced into the chamber, the electromagnetic structure has been modified by modifying the magnetic nuclear resonance properties and the vibration state has been modified by forming supermolecular complexes between the molecules, and that the activated medium is caused to act with its electromagnetic field upon the fuel.

2. Installation according to Claim 1, characterized in that the chamber for the fuel surrounds the chamber for the excitation medium.

3. Installation according to Claim 1 or 2, characterized in that the excitation medium is activated water, which has an electromagnetic field of defined frequency, phase and amplitude.

4. Installation according to one of the preceding Claims, characterized in that thin walls, for example of hard copper or brass, are provided between the chambers.

5. Installation according to one of the preceding Claims, characterized in that a plurality of tubes for the excitation medium are disposed along a circle, so that within this circle a concentrated action upon the fuel passing through exists.

6. Installation according to one of the preceding Claims, characterized in that the activator is provided near the inlet for the fuel into the fuel supply line.

7. Method for reducing fuel consumption and reducing exhaust gases in internal combustion engines, characterized in that the fuel is conducted past a chamber, which is filled with a liquid of modified electromagnetic structure, and the electromagnetic field of this liquid is caused to act upon the fuel.

8. Method according to Claim 7, characterized in that, as the liquid having a modified, electromagnetic structure, water which has been activated by a gravitation energy converter is used.

## Revendications

1. Dispositif pour diminuer la consommation de carburant et réduire l'émission des gaz d'échappement dans des moteurs à combustion interne, dans lequel est disposé dans l'amenée de carburant vers la chambre de combustion, un activateur avec une chambre traversée par le carburant, caractérisé en ce que dans ces chambres, il existe au moins une autre chambre remplie d'un milieu activé, dans lequel on a modifié au préalable, donc avant l'amenée dans la chambre, la structure électromagnétique relativement à son état d'oscillation, en modifiant les caractéristiques de résonance nucléaires magnétiques et en réalisant des complexes supermoléculaires entre les molécules, et en ce qu'on laisse agir le milieu activé avec son champ électromagnétique sur le carburant.

2. Dispositif selon la revendication 1, caractérisé en ce que la chambre pour le carburant entoure la chambre pour le milieu d'activation.

3. Dispositif selon la revendication 1 ou 2, caractérisé en ce que le milieu d'activation est de l'eau activée qui présente un champ électromagnétique de fréquence, phase et amplitude définies.

4. Dispositif selon l'une des revendications précédentes, caractérisé en ce que des parois minces sont prévues entre les chambres, par exemple en cuivre dur ou en laiton.

5. Dispositif selon l'une des revendications précédentes, caractérisé en ce que plusieurs tuyaux pour le milieu d'activation sont disposés le long d'un cercle, de façon à réaliser à l'intérieur de ce cercle un effet concentré sur le carburant passant.

6. Dispositif selon l'une des revendications précédentes, caractérisé en ce que l'activateur est prévu près de l'entrée du carburant dans l'amenée de carburant.

7. Procédé pour diminuer la consommation de carburant et réduire l'émission des gaz d'échappement des moteurs à combustion interne, caractérisé en ce qu'on fait passer le carburant devant une chambre qui est remplie d'un liquide d'une structure électromagnétique modifiée et qu'on laisse agir le champ électromagnétique de ce liquide sur le carburant.

8. Procédé selon la revendication 7, caractérisé en ce qu'on utilise comme liquide présentant une structure électromagnétique modifiée de l'eau qui a été activée par un convertisseur d'énergie de gravitation.